# EUROPEAN PATENT SPECIFICATION

(11) **EP 1 296 561 B1**
(45) Date of publication and mention of the grant of the patent: **09.09.2009**
(21) Application number: 00945951.2
(22) Date of filing: 24.07.2000
(51) Int. Cl.: A23C 19/076, A23C 19/09, A23C 9/133

(54) **FERMENTED MILK PRODUCT AND PROCESS**
FERMENTIERTES MILCHPRODUKT UND VERFAHREN ZU DESSEN HERSTELLUNG
PRODUIT DE LAIT FERMENTE ET PROCEDE DE PRODUCTION

(30) Priority: 26.06.2000 EP 00005945
(43) Date of publication of application: 02.04.2003
(73) Proprietor: SOCIETE DES PRODUITS NESTLE S.A., 1800 Vevey (CH)
(72) Inventor: PETERMANN, Robert, F-14140 Mesnil-Simon (FR); DUPAS, Christian, F-14100 Lisieux (FR); MESSERLI, Alfred, CH-3506 Grosshöchstetten (CH)
(74) Representative: Chautard, Cécile
(86) International application number: PCT/EP2000/007121
(87) International publication number: WO 2002/001961

(56) References cited:
- EP-A- 0 018 761
- EP-A- 0 395 525
- EP-A- 0 818 149
- EP-A- 0 853 888
- EP-A- 0 928 560
- EP-A- 0 938 847
- WO-A-87/07819
- DE-A- 4 032 698
- DE-U- 29 707 523
- GB-A- 1 422 792
- US-A- 2 777 124
- US-A- 5 194 283
- US-A- 5 895 685
- US-A- 5 996 652

## Description

The subject of the present invention is a composite soft unripened curd fermented milk product in a pack and a process for producing it.

### Background of the invention

Unripened Petit-Suisse type of cheese is traditionally prepared by curdling milk with lactic acid formed by lactic starter bacteria, separating the curd from the whey by centrifugal separators or draining the whey from the curd in bags, mixing cream to the drained curd and finally forming and packing optionally lined with paper in thermoformed pots. The forming operation can be carried out before packing or during packing in the case of stirred curd and in this latter case the form is given by the pot and the mass is dosed by means of a volumetric dispenser.

In US-A-5 194 283 semi-hard ripened or unripened curd composite cheese products are manufactured by co-extrusion at a temperature of from 0 to 30° C. In the particular embodiment of two different unripened drained curds co-extrusion has limitations in the case of curd dosed into pots: in particular, one curd must predominantly surround the other and concentric extrusion is the best way to get a visually acceptable design pattern in the case where the different curds are of contrasting colours.

EP 0928560 A1 (D1) is a European patent application published July 14^{th}, 1999. It discloses a chilled ready-made dessert that consists of two viscous to pasty or gelatinous food components, which can be filled into a container in a complex shape without mixing.

US 5895685 A (D2) is a US patent application published April 20^{th}, 1999. It discloses a packed dairy spread that includes two inhomogeneously combined components. The spread contains 10-95 wt % of a component (A) that has a coagulated casein network, a pH of 4.3-5.3 and a Stevens value at 5 DEG C. of 150-700 g, and that contains casein and water in a weight ratio of 1:3 to 1:15. The spread further contains 5-90 wt % of a cream (B) that includes 15-60 wt % of dispersed fatphase and 40-85 wt % continuous aqueous phase. The aqueous phase of cream (B) contains casein and water in a weight ratio of less than 1:15. The Stevens value of cream (B) at 5 DEG C. is 75-500 g. The spread can be used e.g. for spreading on bread or toast. It has unusual and attractive organoleptic properties.

DE 29707523 U (D3) is a German Utility Model to Unilever N.V. published July 10^{th}, 1997. It discloses a dessert-like product comprising at least two phases of fresh cheese.

EP 0853888 Al (D4) is a European patent application to Nestlé S.A. published July 22^{nd}, 1998. It discloses a dessert-product comprising a milk-based component and embedded in said component pieces based on a compound taken from the group consisting of fruit puree, fruit juice, fruit granulates and their mixture, wherein said pieces comprise between 0.5 and 2 % of a low methoxylated pectin.

Whilst the prior art documents cited above, especially D2 and D3, refer to composite milk-based products, neither of them specifically refers to the problem of composing a soft unripened curd fermented milk product in a visually attractive way for the consumer, that comprises two components of contrasting colors but still being of a similar nature, and therefore having similar mechanical properties in terms of food processing. Notably, D2 and D3 deal with composite milk products having components of different natures. And D2 and D3 seek to improve the visual appearance of the end product by specifying a texture value to be achieved. This has nothing to do with the technical problem involved in the present invention which is mixing two similar products of contrasting colors so that they do not mix together.

There is a need for producing composite soft unripened curd fermented milk products of new visually attractive presentation which are appealing to the consumers, particularly to the kids and toddlers.

### Summary of the invention

The invention is as defined in the claims.

The invention thus concerns a composite soft unripened curd fermented milk product in a pack in the form of a pot defining a filling volume comprising as distinct adjoining masses: two fermented milk bases,
wherein the bases are of contrasting colours, are arranged side by side and the interface between the contrasting bases is a median surface within the volume of the pot.

The invention also concerns a process for the production of the above product which comprises concomitantly side by side filling of the fermented milk bases into a pack in the form of a pot,
wherein the bases are separately prepared,
they are separately metered for filling substantially equivalent volumes of the pot at a temperature of from 0° C to 50° C and
the viscosities of the said bases at the filling temperature are adjusted to values corresponding to from 5000 to 15000 mPa.s.

### Detailed description of the invention

In the product of the invention, the contrasting masses in the pot adjoin at an interface. Thus if the product consists of an even number, e.g. two adjoining masses, they meet at a common median plane of symmetry. If the product consists of an odd number, e.g. three adjoining masses, they meet at a common vertical axis of symmetry.

In some cases, filling can be carried out under rotation and the interface of the adjoining masses is then a twisted median surface in the pot.

In the context of the invention, a fermented milk base may comprise unripened cheese curd. Unripened cheese curd may be obtained by known techniques. One conventional technique comprises curdling milk with lactic bacteria and rennet, separating whey by centrifugation or ultrafiltration and thus obtaining coagulated concentrated milk. Another conventional technique so called "direct curd" consists in first concentrating milk by ultrafiltration and/or addition of milk protein concentrate, adding lactic starters and rennet to the concentrated liquid to obtain a coagulated concentrated milk without draining.

A fermented milk base may comprise other fermented products such as stirred yoghurt, fermented milk, fermented vegetable curd or fermented cereal whenever necessary together with a stabilizer to obtain a gellified mass of required viscosity.

The fermented milk base may comprise added fats which can be milk fat, vegetable fats or mixtures of such fats, particularly vegetable fats providing essential fatty acids such as linoleic and alpha-linolenic acids.

The texture of the fermented base must be stable during time and compatible with side by side filling.

It has been found that viscosity of the fermented milk base and the flavouring composition as components of the composite product is a key parameter for side by side filling the product into pots. Thus a viscosity of from 5000 to 15000 mPa.s using a Brookfield type viscometer at 10° C, 50 rpm/disk 5 gives satisfactory results. The global viscosities of the different components of the composite product are the same.

Thus the present product may consist of two distinct fermented milk bases which can also be flavoured.

Preferably, a fermented milk base comprises:
from 50 to 70 % by weight lactic curd of plastic consistency of about 12 to 22 % dry matter by weight,
from 5 to 20 % by weight cream and
from 10 to 30 % by weight of a sweet or fruit preparation.

The sweet or fruit preparation in the fermented milk base preferably comprises a stabilizer. Preferred stabilizers comprise food gums, such as e.g. locust bean gum, guar gum, xanthan gum, starches, preferably short texture modified starch and pectin, used individually or in admixture.
The amount of stabilizer used preferably is from 0.5 to 2 % by weight and most preferably from 0.5 to 1.5 % by weight of the sweet or fruit preparation.

Thus, the viscosity value of the preferred fermented milk base may be obtained by adapting the viscosity of the sweet or fruit preparation to preferably from 4000 to 8000 mPa.s. (Brookfield, 25° C/15 s, 50 rpm/disk 5).

The fermented milk bases have a high amount of proteins and carbohydrates. They may be enriched in vitamins, e.g. A, E, D and C and minerals, e.g. Calcium, Potassium. This is important for children, particularly toddlers who have specific nutritional needs due to their physiology requiring more energy, proteins and nutrients.

Side by side filling provides for very interesting organoleptic and nutritional advantages. Contrasting colours may be associated with contrasting taste sensations. At consumer's choice, the different products may be consumed the one after the other.

From the nutritional point of view, since the fermented milk bases are stabilized and in juxtaposed layers there is no substantial migration of ingredients from one base to the other. Thus the fermented bases may contain probiotic strains in one base and dietary fibers, especially prebiotics in the form of soluble fibers which help in building healthy intestinal flora and prevent digestive problems in the other base.

The fermented milk bases may also be aerated to lighten their texture. An aerated curd thus assumes the form of a cheese mousse. Such a mousse preferably contains from 0.5 to 3 % by weight of a stabilizer or of a stabilizer/emulsifier blend typically used in ice creams. The curd is preferably aerated to an overrun of up to 120 %, most preferably of from 50 to 120 % with an inert gas; for example nitrogen.

The fermented milk bases may contain inclusions such as pieces of fruit or flavourings, for example cocoa or chocolate.

In a preferred way for carrying out the process of the invention, two distinct fermented milk bases for example two moist unripened cheese curds of plastic consistency are fed, for example by single or double Archimedes screws, or by any other positive pump to hoppers, which can be pressurized.

From the hoppers controlled valves allow feeding of the two masses to dosing cylinders and from there by dosing pistons through pipes to filling head comprising two essentially parallel and vertical filling nozzles and from there into pots carried by a conveyor belt or chain moving step by step underneath.

In this case the filling of a pot consists of two half-portions and each half-portion is metered by means of a portion control mechanism. This mechanism may preferably comprise upstream of the nozzle a connecting pipe through which the product is delivered to the nozzle and which may be closed and opened by means of a controlled valve. The valve is upstream of a passage in the nozzle. Preferably, the valves are resilient membranes which are controlled by air pressure. The metering chambers consist of the piston cylinders and the pipe section upstream of the membranes. Thus the passageways including the connecting pipes and the passages in the nozzles are preferably optimised in order to provide symmetric flow paths for the distinct products forming the half portions for improved filling accuracy whilst limiting steric hindrance and providing for a compact design of the filling head.

Preferably, the dosing pistons are driven individually to allow for adjustment of dosing speed, by means of a variator of the dosing piston driving motor. This can provide for slightly delayed filling of one mass respective to the other for accurate side by side filling when the viscosities of the masses are not exactly the same.

The pots are presented under the filling head. For proper filling without any air pockets being formed, the filling head preferably is mounted on an up-and-down device by which the nozzles descend into the pots in proximity of their bottoms and fill them while they are lifted. Thus the connecting pipes between the dosing cylinders and the nozzles are flexible. During the filling operation the pots are stationary. After being filled the pots advance one step.

A pair of filling nozzles which deliver each a half-portion into a pot may be mounted on a rotary joint thus providing two complementary half-portions of spiral shape. In a variant, a device, for example a permanently rotating plate placed beneath the conveyor may lift the pot so that it surrounds the nozzles and impart a downward spinning movement to it during the filling process, the filling head remaining stationary.

The pots used may be of cylindrical or frustoconical shape with a circular, oval or square opening or e.g. frustoconical with an opening in the form of a stylized heart.

The pots may be opaque or advantageously transparent to show the contrasted layers.

The filling volume may be preferably of from 20 to 200 cm³.

Preferably, the pots are in multiple packs and thermoformed, filled and sealed with lids in a form-fill-seal equipment.

### Examples

The following Examples illustrate the invention. In these Examples, percentages and parts are by weight, unless otherwise stated.

### Example 1

### Preparation of fruit Petit Suisse, fermented base 1

Unripened curd was prepared in a standard way from skimmed milk standardised to 10 % solids non fat, pasteurized, cooled to ambient temperature and inoculated with mesophilic lactic starter, CaC12 and rennet. After fermentation to pH 4.5-4.6 the curd was broken into small pieces, thermised for a few min., cooled and drained by centrifugation to 16.2 % total solids.

A strawberry fruit preparation was obtained by melting frozen fruit and mixing with granulated sucrose, stabilizers, citric acid, whey and water. After pasteurization, the mixture was cooled to 65° C, colourings, flavourings, potassium sorbate and vitamins were added. The fruit preparation contained 63.5 % dry matter (Brix refractometer) and was stabilized with 1.5 % of a mixture of locust bean gum (LBG) and short texture modified starch, containing predominantly locust bean gum. The fruit preparation had a viscosity of 5496 mPa.s (Brookfield, 25° C/15 s, 50 rpm/disk 5).

To 63 % of the preceding curd was added 10 % pasteurized cream containing 45 % fat and 27 % preceeding fruit preparation and the mixture was cooled to 10° C in a plate heat exchanger.

The fermented base had a total solids content of 30.5 % and a viscosity of 9.200 mPas at 10° C (filling temperature).

### Preparation of plain Petit Suisse, fermented base 2

Plain Petit Suisse was prepared as for the strawberry flavoured version but without frozen fruit, colouring and flavouring in the sweet preparation added to the curd and cream, replacing them by whey. The added preparation contained 64.1 % dry matter (° Brix) and had a viscosity of 5512 mPa.s (Brookfield, 25° C/15 s, 50 rpm/disk 5).

To 63 % of the preceding curd was added 10 % pasteurized cream containing 45 % fat and 27 % preceeding sweet preparation and the mixture was cooled in a plate heat exchanger.

The fermented base had a total solids content of 29.9 % and a viscosity of 9050 mPa.s at 10° C (filling temperature).

### Preparation of the composite products

Both masses of fermented bases 1 and 2 were fed to pressurized hoppers which pressure was controlled individually and dosed into thermoformed frustoconical pots of plastic material containing 65 g of product with openings in the form of a stylized heart with a form-fill-seal filling machine.

Filling of pots carried by a step by step conveyor was carried out by parallel nozzles in a flexible filling head provided with a device for up-and-down movement, comprising entering the nozzles into the pots for filling, and lifting the nozzles out of the pots after filling. The filling time was about 0.8 s. Membrane dosing pumps with common motor drive control were used for simultaneously side-by-side filling of both masses. The masses were distributed by flexible connecting pipes to the nozzles.

The products had a pleasant appearance with well-defined medium separation plan between the two contrasting red and white masses.

### Example 2

The process of Example 1 was carried out with similar results, the difference being that the fruit preparation (fermented mass 3) and the sweet preparation (fermented mass 4) of the fermented masses were stabilized with 0.75 % calcium reactive pectin dissolved in hot water.

The added fruit preparation of fermented mass 3 contained 64.1 % dry matter (° Brix) and had a viscosity of 6440 mPa.s (Brookfield, 25° C/15 s, 50 rpm/disk 5).

The added sweet preparation of fermented mass 4 contained 64.1 % dry matter (° Brix) and had a viscosity of 7631 mPa.s (Brookfield, 25° C/15 s, 50 rpm/disk 5).

### Example 3

The process of Example 1 was carried out with similar results with two fruit preparations, fermented masses 5 and 6. In fermented mass 5, strawberry flavoured and in fermented mass 6, banana flavoured the fruit preparations were stabilized with 0.6 % of a mixture of LBG and xanthan gum where LBG was predominant. In addition, the masses contained 2.5 % added calcium from added lactic mineral concentrate, corresponding to 240 mg calcium per 100 g product.

The added fruit preparation of fermented mass 5 contained 66.5 % dry matter (° Brix) and had a viscosity of 8980 mPa.s (Brookfield, 25° C/15 s, 50 rpm/disk 5).

The added sweet preparation of fermented mass 6 contained 66.5 % dry matter (° Brix) and had a viscosity of 8640 mPa.s (Brookfield, 25° C/15 s, 50 rpm/disk 5).

In addition, calcium stability was good in accelerated storage tests after 7 days storage at 30° C.

### Example 4

The process of Example 1 was carried out with similar results using as fermented milk bases milk fermented at 40° C with thermophilic lactic bacteria (Lactobacillus bulgaricus, Streptococcus thermophilus), one flavoured with a first fruit preparation (fermented mass 7) and the other with a distinct fruit preparation (fermented mass 8). The fermented milk bases had the following composition:

| Ingredient | % |
|---|---|
| Milk (3.5 % fat) | 72.8 |
| Skimmed milk powder | 3 |
| Starter culture | 3 |
| Sucrose | 10 |
| Fruit preparation | 10 |
| Stabilizer (0.7 % gelatine and 0.5 % starch) | 1.2 |

## Claims

1. Composite soft unripened curd fermented milk product in a pack in the form of a pot defining a filling volume, comprising two adjoining masses of fermented milk product of contrasting colors arranged side-by-side, wherein the interface between the two adjoining masses defines the median surface within the volume of the pot, **characterized in that** said adjoining masses of product have global viscosities from 5000 to 15000 mPa.s, said viscosities being measured by using a Brookfield viscometer at 10°C, 50 RPM/disk 5.

2. Product according to claim 1, in which one of the two fermented milk bases comprises from 50 to 70 % by weight lactic curd of plastic consistency of about 12 to 22 % dry matter by weight, from 5 to 20 % by weight cream and from 10 to 30 % by weight of a fruit preparation.

3. Product according to claim 1, in which the other of the two fermented milk bases comprises from 50 to 70 % by weight lactic curd of plastic consistency of about 12 to 22 % dry matter by weight, from 5 to 20 % by weight cream and from 10 to 30 % by weight of a sweet preparation

4. Product according to any of claims 1 to 3, in which the sweet or fruit preparation in the fermented milk base is stabilized with a stabilizer in an amount of preferably from 0.5 to 2 % by weight and most preferably from 0.5 to 1.5 % by weight of the sweet or fruit preparation.

5. Product according to any preceding claim, wherein the global viscosities of the distinct adjoining masses of the composite product are about the same.

6. Process for the production of the product of claim 1, which comprises concomitantly side by side filling each of the fermented milk bases into a pack in the form of a pot,
wherein the said bases are separately prepared, they are separately metered for filling substantially equivalent volumes of the pot at a temperature of from 0° C to 50° C and which comprises
feeding the two distinct masses of plastic consistency to hoppers, in which controlled valves allow feeding of the two masses to dosing cylinders and from there by dosing pistons through pipes to a filling head comprising two essentially parallel and vertical filling nozzles and from there into pots carried by a conveyor belt or chain moving step by step underneath and in which the filling of a pot consists of two half-portions and each half-portion is metered by means of a portion control mechanism, **characterized in that** the viscosities of the said bases at the filling temperature adjusted to values corresponding to from 5000 to 15000 mPa.s.

7. Process according to claim 6, in which the portion control mechanism comprises upstream of the nozzle a connecting pipe through which the product is delivered to the nozzle and which may be closed and opened by means of a controlled valve, in which the valve is upstream of a passage in the nozzle, the metering chambers consist of the piston cylinders and the pipe section upstream of the valve and in which the passageways including the connecting pipes and the passages in the nozzles provide symmetric flow paths for the distinct masses forming the half-portions for improved filling accuracy whilst limiting steric hindrance and providing for a compact design of the filling head.

8. Process according to claim 6, wherein the dosing pistons are driven individually to allow for adjustment of dosing speed, by means of a variator of the dosing piston driving motor, which provides for slightly delayed filling of one mass respective to the other for accurate side by side filling when the viscosities of the masses are not exactly the same.

9. Process according to claim 6, wherein for proper filling without any air pockets being formed, the filling head preferably is mounted on an up-and-down device by which the nozzles descend into the pots in proximity of their bottoms and fill them while they are lifted.

## Patentansprüche

1. Zusammengesetztes Produkt mit einem weichen ungereiften Frischkäse aus fermentierter Milch in einer Verpackung in Form eines Bechers, der ein Füllvolumen definiert, das zwei aneinander angrenzende Massen an fermentiertem Milchprodukt von kontrastierenden Farben aufweist, die nebeneinander angeordnet sind, wobei die Grenzfläche zwischen den beiden aneinander angrenzenden Massen die mittlere Fläche im Volumen des Bechers definiert, **dadurch gekennzeichnet, dass** die beiden aneinander angrenzenden Massen des Produkts globale Viskositäten von 5000 bis 15000 mPa·s aufweisen, wobei die Viskositäten gemessen werden unter Verwendung eines Brookfield-Viskosimeters bei 10 °C, 50 U/min/Scheibe 5.

2. Produkt nach Anspruch 1, bei dem eine der beiden fermentierten Milchbasen von 50 bis 70 Gew.-% milchsauren Frischkäse von plastischer Konsistenz mit etwa 12 bis 22 Gew.-% Trockenmasse, von 5 bis 20 Gew.-% Sahne und von 10 bis 30 Gew.-% einer Fruchtzubereitung umfasst.

3. Produkt nach Anspruch 1, bei dem die andere der beiden fermentierten Milchbasen von 50 bis 70 Gew.-% milchsauren Frischkäse von plastischer Konsistenz mit etwa 12 bis 22 Gew.-% Trockenmasse, von 5 bis 20 Gew.-% Sahne und von 10 bis 30 Gew.-% einer süßen Zubereitung umfasst.

4. Produkt nach irgendeinem der Ansprüche 1 bis 3, bei dem die süße oder die Frucht-Zubereitung in der fermentierten Milchbasis mit einem Stabilisator in einer Menge von vorzugsweise 0,5 bis 2 Gew.-% und besonders bevorzugt von 0,5 bis 1,5 Gew.-% der süßen oder Frucht-Zubereitung stabilisiert ist.

5. Produkt nach irgendeinem vorausgehenden Anspruch, wobei die globalen Viskositäten der unterschiedlichen aneinander angrenzenden Massen des zusammengesetzten Produkts etwa gleich sind.

6. Verfahren zur Herstellung des Produkts nach Anspruch 1, das das gemeinsame Einfüllen einer jeden der fermentierten Milchbasen Seite an Seite in eine Verpackung in Form eines Bechers umfasst,
wobei die Basen separat hergestellt sind, separat für ein Abfüllen in im Wesentlichen entsprechende Volumina des Bechers bei einer Temperatur von 0 bis 50° dosiert sind, und das umfasst:
Einspeisen der beiden unterschiedlichen Massen mit plastischer Konsistenz in Zuführbehälter, in denen gesteuerte Ventile die Zufuhr der beiden Massen zu Dosierzylindern und von dort über Dosierkolben durch Rohre zu einem Füllkopf ermöglichen, der zwei im Wesentlichen parallele und vertikale Fülldüsen umfasst, und von dort in Becher, die von einem Förderband oder einer Förderkette getragen werden, die sich schrittweise darunter bewegt, und wobei die Füllung eines Bechers aus zwei Halbportionen besteht und jede Halbportion mit Hilfe eines Portions-Steuermechanismus dosiert wird, **dadurch gekennzeichnet, dass** die Viskositäten der genannten Basen bei der Fülltemperatur auf Werte eingestellt sind, die 5000 bis 15000 mPa·s entsprechen.

7. Verfahren nach Anspruch 6, wobei der Portions-Steuermechanismus stromauf der Düse ein Verbindungsrohr aufweist, durch das das Produkt der Düse zugeführt wird und das mit Hilfe eines gesteuerten Ventils geschlossen und geöffnet werden kann, wobei das Ventil stromauf einer Durchgangsöffnung in der Düse angeordnet ist, wobei die Dosierkammern aus den Kolbenzylindern und dem Rohrabschnitt stromauf des Ventils bestehen, und wobei die Zufuhrleitungen, die die Verbindungsrohre und die Durchgangsöffnungen in den Düsen umfassen, symmetrische Strömungswege für die unterschiedlichen Massen bilden, die die Halbportionen bilden, zur verbesserten Füllgenauigkeit unter Beschränkung sterischer Behinderungen und um eine kompakte Konstruktion des Füllkopfes zu gewährleisten.

8. Verfahren nach Anspruch 6, wobei die Dosierkolben individuell angetrieben sind, um eine Anpassung der Dosiergeschwindigkeit zu ermöglichen, und zwar mit Hilfe eines Variators des Antriebsmotors des Dosierkolbens, was eine leicht verzögerte Füllung durch eine Masse im Vergleich mit der anderen für eine genaue Seite an Seite-Einfüllung gewährleistet, wenn die Viskositäten der Massen nicht exakt die gleichen sind.

9. Verfahren nach Anspruch 6, wobei zum ordnungsgemäßen Füllen, ohne dass irgendwelche Lufttaschen gebildet werden, der Füllkopf vorzugsweise an einer Auf-und-Ab-Vorrichtung montiert ist, mittels derer die Düsen in die Becher in der Nähe ihrer Böden abgesenkt werden und diese beim Anheben füllen.

## Revendications

1. Produit laitier fermenté souple composite à base de caillebotte sans affinage, dans un conditionnement prenant la forme d'un pot définissant un volume de remplissage qui comprend deux pâtes adjacentes juxtaposées de produit laitier fermenté de couleurs contrastées, dans lequel l'interface entre les deux pâtes adjacentes définit la surface médiane au sein du volume du pot, **caractérisé en ce que** lesdites pâtes adjacentes de produit ont des viscosités globales de 5000 à 15 000 mPa.s, lesdites viscosités étant mesurées à l'aide d'un viscosimètre de Brookfield à 10 °C, 50 tr/min avec disque 5.

2. Produit selon la revendication 1, dans lequel l'une des deux bases de lait fermenté comprend de 50 à 70 % en masse de caillebotte lactique de consistance plastique, d'environ 12 à 22 % en poids de matière sèche, de 5 à 20 % en poids de crème et de 10 à 30 % en masse d'une préparation de fruits.

3. Produit selon la revendication 1, dans lequel l'autre des deux bases de lait fermenté comprend de 50 à 70 % en masse de caillebotte lactique de consistance plastique, d'environ 12 à 22 % en poids de matière sèche, de 5 à 20 % en poids de crème et de 10 à 30 % en masse d'une préparation sucrée.

4. Produit selon l'une quelconque des revendications 1 à 3, dans lequel la préparation sucrée ou de fruits dans la base de lait fermenté est stabilisée avec un stabilisateur à raison de préférence de 0,5 à 2 % en poids et plus préférentiellement de 0,5 à 1,5 % en poids de la préparation sucrée ou de fruits.

5. Produit selon l'une quelconque des revendications précédentes, dans lequel les viscosités globales des pâtes adjacentes distinctes du produit composite sont sensiblement identiques.

6. Procédé pour la production du produit selon la revendication 1, qui comprend le remplissage concomitant, côte à côte, de chacune des bases de lait fermenté dans un conditionnement sous la forme d'un pot,
dans lequel lesdites bases sont préparées séparément, sont mesurées séparément afin de remplir substantiellement des volumes équivalents du pot à une température de 0 °C à 50 °C et comprenant
l'amenée des deux pâtes séparées de consistance plastique dans des trémies où des soupapes asservies permettent d'envoyer les deux pâtes à des cylindres de dosage, puis via des pistons de dosage à travers des tubes, à une tête de remplissage comprenant deux buses de remplissage essentiellement parallèles et verticales et enfin dans des pots transportés par une bande ou chaîne transporteuse se déplaçant pas à pas au-dessous et dans lequel le remplissage d'un pot se compose de deux demi-portions et chaque demi-portion est mesurée à l'aide d'un mécanisme de commande des portions, **caractérisé en ce que** les viscosité desdites bases à la température de remplissage sont ajustées à des valeurs correspondantes, de 5000 à 15 000 mPa.s.

7. Procédé selon la revendication 6, dans lequel le mécanisme de commande des portions comprend en amont de la buse un tube de raccordement au travers duquel le produit est amené à la buse et qui peut être ouvert et fermé à l'aide d'une soupape asservie, dans lequel la soupape est en amont d'une ouverture traversant la buse, les chambres de mesure se composant des cylindres des pistons et de la section de tube en amont de la soupape, et dans lequel les passages composés des tubes de raccordement et des ouvertures dans les buses fournissent des trajets d'écoulement symétriques pour les pâtes distinctes formant les demi-portions pour assurer une précision de remplissage accrue tout en limitant l'empêchement stérique et en assurant une construction compacte de la tête de remplissage.

8. Procédé selon la revendication 6, dans lequel les pistons de dosage sont commandés individuellement afin de permettre d'ajuster la vitesse de dosage, à l'aide d'un variateur du moteur de commande du piston de dosage, ce qui assure un remplissage légèrement retardé d'une pâte par rapport à l'autre afin d'obtenir un remplissage côte à côte précis lorsque les viscosités des pâtes ne sont pas exactement identiques.

9. Procédé selon la revendication 6, dans lequel, pour assurer un remplissage correct sans formation de poches d'air, la tête de remplissage est montée de préférence sur un dispositif montant et descendant grâce auquel les buses descendent dans les pots à proximité de leur fond et les remplissent tout en étant relevées.
